# FASCICULE DE BREVET EUROPEEN

(11) **EP 4 088 012 B1**
(45) Date de publication et mention de la délivrance du brevet: **29.11.2023**
(21) Numéro de dépôt: 20821276.1
(22) Date de dépôt: 15.12.2020
(51) Int. Cl.: F01N 3/025, F01N 9/00, F02D 41/00, F02D 41/02, F02D 41/12

(54) **PROCÉDÉ DE RÉGÉNÉRATION D'UN FILTRE À PARTICULES DE MOTEUR À COMBUSTION INTERNE À ALLUMAGE COMMANDÉ, ET DISPOSITIF ASSOCIÉ**
VERFAHREN ZUR REGENERATION EINES PARTIKELFILTERS EINER FREMDGEZÜNDETEN VERBRENNUNGSKRAFTMASCHINE, UND VORRICHTUNG DAFÜR
METHOD FOR REGENERATION OF A PARTICULATE FILTER OF AN SPARK IGNITED INTERNAL COMBUSTION ENGINE, AND APPARATUS THEREFOR

(30) Priorité: 09.01.2020 FR 2000146
(43) Date de publication de la demande: 16.11.2022
(73) Titulaire: Renault s.a.s, 92100 Boulogne Billancourt (FR)
(72) Inventeur: HILLAIRE, Matthieu, 91150 ETAMPES (FR)
(86) Numéro de dépôt international: PCT/EP2020/086136
(87) Numéro de publication internationale: WO 2021/139970

(56) Documents cités:
- EP-A1- 3 581 771
- WO-A1-2020/000010
- DE-A1-102013 220 881
- DE-A1-102016 202 349
- DE-A1-102019 114 898

## Description

### Domaine technique de l'invention

La présente invention concerne un procédé de régénération d'un piège à oxydes d'azote de moteur à combustion interne du type à allumage commandé. Elle trouve une application particulièrement avantageuse dans les moteurs des véhicules automobiles fonctionnant à l'essence.

L'invention concerne également un dispositif de motorisation pour la mise en oeuvre du procédé de régénération selon l'invention.

### Etat de la technique

Les moteurs à combustion interne modernes du type à allumage commandé (fonctionnant notamment à l'essence) des véhicules automobiles, qui sont soumis à des normes anti-pollution de plus en plus sévères, sont équipés de divers systèmes de post-traitement des molécules polluantes émises dans les gaz de combustion desdits moteurs, afin de limiter les rejets d'espèces nocives dans l'atmosphère extérieure.

Les moteurs à allumage commandé sont notamment de plus en plus équipés d'un filtre à particules (connu aussi sous l'acronyme anglais GPF pour : «Gasoline Particulate Filter) de manière à dépolluer les gaz de combustion des particules fines (PM), ces dernières étant réglementées en masse et en nombre.

De manière connue en soi, un filtre à particules fonctionne de manière séquentielle. Pendant le fonctionnement habituel du moteur, c'est-à-dire le plus souvent à richesse 1, en d'autres termes dans les proportions stœchiométriques du mélange air-carburant admis dans le moteur, le filtre stocke les particules sans les traiter, avec une certaine efficacité qui correspond à la proportion des particules entrantes qui y est effectivement stockée, le reste ce cette quantité entrante étant directement évacué à la sortie du piège.

A mesure que le filtre se remplit, c'est-à-dire que la masse de particules fines augmente, la pression différentielle à ses bornes augmente, de sorte qu'il rejette de plus en plus de PM émises par le moteur. Il convient alors de faire diminuer la masse de PM stockée dans le filtre pour restaurer l'efficacité de ce dernier. De manière fréquentielle, par exemple quand la masse de PM stockée atteint un seuil, on procède un basculement du fonctionnement du moteur dans un autre mode de fonctionnement, dit de régénération, qui a pour effet de vider le filtre et de ramener la masse de PM stockée à zéro ou au moins à une valeur plus faible, où la pression différentielle est moins élevée et où l'efficacité du filtre est restaurée au moins partiellement. Ce procédé est désigné par l'expression « régénération active ».

Pour cela, il est connu de provoquer un basculement du réglage du moteur en mélange pauvre, c'est-à-dire avec une proportion du mélange air-carburant introduit dans le moteur qui est strictement inférieure à la proportion stoechiométrique, typiquement à une richesse sensiblement égale à 0,90. Cela se traduit par une forte augmentation de la température à l'échappement du moteur, apte à provoquer une combustion du stock des PM en molécules plus inoffensives qui sont le produit normal de la combustion( dioxyde de carbone CO₂ et eau H₂O), sous l'effet de l'oxygène excédentaire.

Par ailleurs, il est connu que les filtres à particules des moteurs à essence peuvent également faire l'objet, dans certaines conditions de fonctionnement, d'une régénération passive ou naturelle, c'est-à-dire d'une régénération spontanée, qui n'est pas provoquée par une action volontaire sur le réglage du moteur, au contraire de la régénération dite active.

De telles conditions de fonctionnement sont réunies lorsque de grandes quantités d'oxygène sont envoyées à l'échappement du moteur et que la température est élevée. Ce cas de figure se présente lorsque le conducteur relève complètement le pied de la pédale d'accélérateur du véhicule, par exemple dans une forte pente descendante. Il est connu de l'état de la technique qu'à cette occasion, on stoppe l'injection de carburant dans le moteur et on ferme une vanne de réglage de débit d'air du moteur pour que le conducteur du véhicule bénéficie du « frein moteur ».

L'augmentation du taux d'oxygène dans les gaz traversant le filtre à particules et l'augmentation de la température à l'échappement est apte à provoquer une combustion des particules qui est identique à la combustion qui est observée dans le cas d'une régénération active du filtre. Cependant, cette augmentation du taux d'oxygène est susceptible de provoquer un emballement de la réaction de combustion des particules dans le filtre, qui fait beaucoup augmenter la température. En outre, la diminution du débit global des gaz d'échappement dans le filtre à particules, due à la fermeture de la vanne d'admission, rend plus difficile d'évacuation de la chaleur produite par la combustion des particules.

On connaît de l'état de la technique plusieurs procédés qui visent à éviter un tel emballement, susceptible de provoquer une casse du filtre sous l'effet des températures excessives. Il est notamment possible de continuer de faire fonctionner le moteur à richesse 1 au lieu de stopper l'injection de carburant en cas de lever de pied de la part du conducteur, ce qui a pour effet d'inhiber complètement la régénération naturelle des particules. Cependant, un tel procédé a pour conséquence de faire produire un couple non désiré par le moteur, ce qui va à l'encontre de l'effet dit de « frein moteur » qui est recherché par le conducteur. D'autre part, il augmente la fréquence des régénérations actives du filtre dans lesquelles on modifie le réglage du moteur en mélange pauvre, ce qui présente plusieurs inconvénients dont notamment la production d'une grande quantité d'oxydes d'azote (NOx), qui sont aussi une espèce sévèrement réglementée.

La publication FR-A1-3029964-A1 vise aussi à éviter l'emballement d'un filtre à particules lors d'une régénération. Elle divulgue un procédé de régénération d'un filtre à particules d'une ligne d'échappement d'un moteur à combustion interne appartenant à un groupe motopropulseur hybride d'un véhicule automobile, ce groupe motopropulseur hybride comprenant également un moteur électrique associé à une batterie électrique, comprenant une étape dans laquelle on déclenche la régénération du filtre au cours de laquelle on brûle lesdites particules piégées dans ce filtre à particules, et, au cours de la régénération du filtre, on commande le groupe motopropulseur hybride de manière que le moteur à combustion interne charge la batterie du moteur électrique. Un tel procédé n'est utilisable que sur un véhicule hybride. En outre, les publications DE 10 2016 202349 A1 ou DE 10 2013 220881 A1 présentent des procédés de régénération d'un filtre à particules.

### Présentation de l'invention

La présente invention vise à remédier aux défauts des procédés connus de régénération des pièges à particules connus pour un moteur à allumage commandé de véhicule automobile qui n'est pas nécessairement associé à une machine électrique.

Le procédé selon l'invention propose un procédé de régénération d'un filtre à particules monté dans le circuit d'échappement d'un moteur à combustion interne à allumage commandé de véhicule automobile, ledit procédé comprenant au moins un premier mode de régénération active en mélange pauvre du filtre qui est activé quand une valeur de la masse de particules fines stockée dans le filtre est supérieure ou égale à un seuil, quand la pédale d'accélérateur du véhicule n'est pas complètement relevée.

La principale caractéristique du procédé selon l'invention est qu'il comprend en outre :
- une étape d'identification d'un état complètement relevé de ladite pédale d'accélérateur ;
- lorsqu'un tel état est constaté, une étape d'identification d'un risque d'emballement du filtre à particules en l'absence d'injection de carburant dans le moteur ;
- en l'absence d'un tel risque d'emballement, une étape de régénération dans un deuxième mode de régénération passive du filtre, dans laquelle l'injection de carburant dans le moteur est coupée ; et,
- en présence d'un tel risque d'emballement, une étape de régénération dans un troisième mode de régénération active modérée du filtre, dans laquelle la richesse du mélange air-carburant admis dans le moteur est réglée à une valeur sensiblement égale à 0,98.

### Brève description des figures

D'autres caractéristiques et avantages de l'invention apparaîtront à la lecture de la description qui suit d'un mode de réalisation non limitatif de l'invention, à l'appui des figures annexées, dans lesquelles :
La figure 1 est une vue schématique d'un dispositif de motorisation apte à la mise en oeuvre du procédé selon l'invention.
La figure 2 est une représentation schématique de la zone de risque d'emballement d'un filtre à particules.

La figure.3 est un logigramme des étapes d'un mode de réalisation du procédé selon l'invention.

### Description détaillée des figures

Dans la description qui va suivre, des chiffres de référence identiques désignent des pièces identiques ou ayant des fonctions similaires.

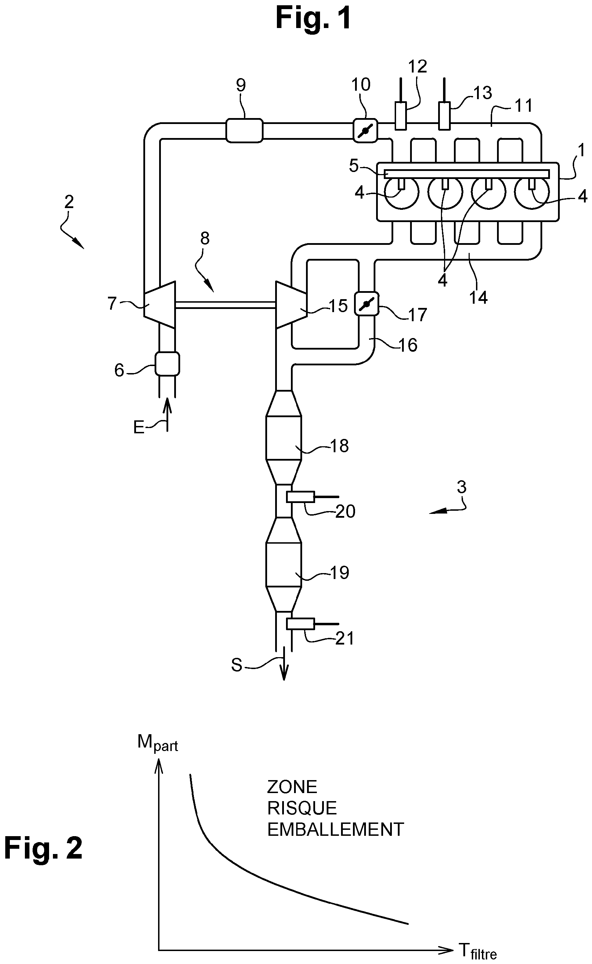

Sur la figure 1, on a représenté un dispositif de motorisation apte à la mise en oeuvre du procédé selon l'invention. Le dispositif comprend un moteur à combustion interne 1 qui est du type à allumage commandé (fonctionnant notamment à l'essence). Il est ici du type suralimenté, sans nuire à la généralité de l'invention.

Le moteur 1 est associé à un circuit d'admission d'air 2 et à un circuit d'échappement 3. Le moteur est ici du type à injection directe. Il est alimenté en carburant dans chacun de ses cylindres par un injecteur de carburant 4, à partir par exemple d'une rampe commune à haute pression 5.

L'air frais prélevé dans l'atmosphère extérieure pénètre dans le circuit d'admission 2 dans le sens de la flèche E. Il peut traverser des composants tels qu'un filtre à air 6. Le moteur 1 étant du type suralimenté sur l'exemple de la figure 1, il comporte un compresseur 7 d'un turbocompresseur 8 de suralimentation. L'air traverse le compresseur 7 puis un refroidisseur d'air suralimenté 9, une vanne de réglage du débit d'air 10 entrant dans le moteur, ou boîtier-papillon 10, et il pénètre ensuite dans un collecteur d'admission 11, ou répartiteur 11 du moteur. Sur l'exemple de la figure 1, le répartiteur 11 est pourvu d'un capteur de pression 12 et d'un capteur de température 13, prévus pour mesurer respectivement la pression Pcol et la température Tcol régnant dans le répartiteur 11. De manière connue en soi, ladite pression Pcol et ladite température Tcol permettent, en association avec un modèle de remplissage du moteur, de connaître la valeur du débit (massique) Qadm des gaz entrant dans le moteur 1. En variante non représentée, le moteur peut être pourvu d'un débitmètre à l'admission apte à fournir une mesure directe du débit Qadm des gaz entrant dans le moteur.

Les gaz de combustion du moteur sont évacués dans un collecteur d'échappement 11 du moteur, puis ils traversent une turbine 15 du turbocompresseur 8. La turbine 15 peut être du type à géométrie fixe et associée à un circuit de décharge 16 à l'échappement muni d'une vanne de décharge à l'échappement 17 (dite aussi vanne « pop-off » selon sa dénomination en anglais). En variante non représentée, elle peut être du type à géométrie variable, pour le réglage de l'énergie de détente prélevée par la turbine sur les gaz d'échappement.

Sur l'exemple de la figure 1, les gaz d'échappement traversent ensuite, d'amont en aval dans leur sens de circulation : un premier dispositif de post-traitement 18 des gaz d'échappement du moteur, par exemple un catalyseur trois voies 18, ou un piège à oxydes d'azote 18, ou une combinaison des deux, puis un deuxième dispositif de post-traitement des gaz 19 qui est selon l'invention un filtre à particules 19. Ce filtre 19 est associé à deux capteurs de pression, plus précisément un capteur de pression amont 20, prévu pour mesurer une valeur de pression à l'entrée du filtre Pam , et un capteur de pression aval 21, prévu pour mesure une valeur de pression à la sortie du filtre Pav . En variante non représentée, le filtre peut aussi être équipé d'un capteur de pression différentielle, prévu pour donner une valeur de la pression différentielle ΔP aux bornes du filtre, ladite pression différentielle étant égale à la différence entre la valeur de la pression à l'entrée du filtre Pam et la valeur de la pression à la sortie du filtre Pav.

De manière connue en soi, la quantité (masse) Mpartde particules fines PM stockée à l'intérieur du filtre peut être déterminée à partir d'une cartographie préétablie dont les entrées sont le débit des gaz d'échappement Qech traversant le filtre et la pression différentielle ΔP régnant aux bornes du filtre. Par exemple, le débit des gaz d'échappement Qech peut être déterminé comme étant égal à la somme du débit des gaz admis Qadm dans le moteur et du débit du carburant injecté Qcarb , et la pression différentielle ΔP peut être déterminée comme étant égal à la différence entre la valeur de la pression à l'entrée du filtre Pam et la valeur de la pression à la sortie du filtre Pav. Cette quantité de particules permet notamment, lorsqu'elle atteint un seuil, de déclencher des régénérations actives du filtre en réglant le moteur à une valeur de richesse voisine de 0,90.

On notera aussi que d'autres particularités non représentées du dispositif de motorisation sont possibles sans nuire à la généralité de l'invention. Par exemple, il est possible que le circuit d'échappement comporte au moins un circuit de recirculation partielle des gaz d'échappement à l'admission du moteur (dit aussi circuit « EGR », de l'acronyme anglais pour : Exhaust Gas Recirculation »), par exemple un circuit de recirculation à haute pression ou un circuit de recirculation à basse pression.

Le fonctionnement du moteur est placé sous la supervision d'un calculateur électronique (non représenté), qui détermine un certain nombre de paramètres de fonctionnement du moteur à partir d'une pluralité de capteurs et qui pilote une pluralité d'actionneurs du moteur.

Sur la figure 2, on a représenté la zone de risque d'emballement d'un filtre à particules de moteur à allumage commandé, dans le cas où une régénération naturelle du filtre viendrait à être provoquée par une coupure d'injection de carburant accompagnée d'une fermeture du boîtier-papillon 10 du moteur lors d'un lever de pied, c'est-à-dire lorsque le conducteur du véhicule relève complètement le pied de la pédale d'accélérateur du véhicule. L'axe des abscisses représente la température Tfiltre du filtre à particules, et l'axe des ordonnées la masse de particules Mpart stockée dans le filtre. On peut établir par des essais préalables au banc une courbe représentant un seuil de masse de particules Mpart en fonction de la température, au-dessus de laquelle le risque d'emballement est présent. On peut constater grâce à de tels essais que ledit seuil de masse S est une fonction décroissante de la température Tfiltre du filtre. En d'autres termes, il y a un risque d'emballement lorsque la masse de particules stockées est élevée même si la température est faible, tandis que le risque d'emballement est présent même pour une masse de particules assez faible si la température est élevée. C'est le risque d'emballement dans la zone située au-dessus de la courbe de seuil de masse, qui est bien identifée expérimentalement, que l'invention propose d'éliminer.

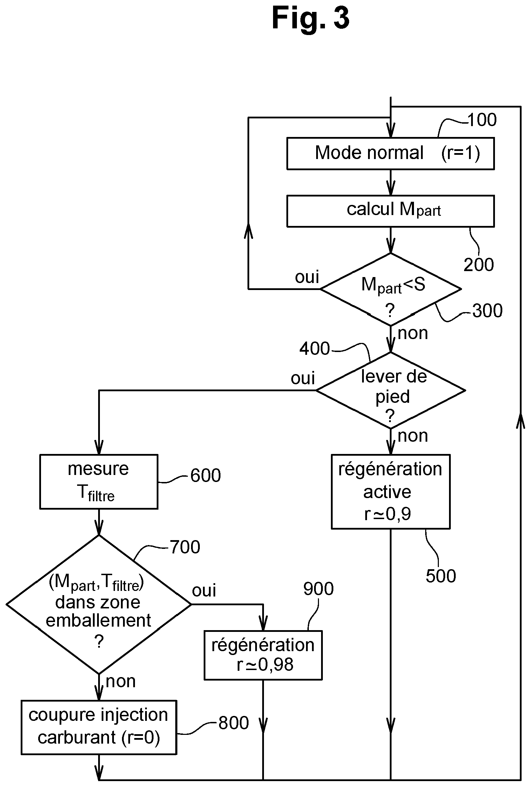

La figure 3 représente un logigramme des différentes étapes du procédé, selon un mode de réalisation non limitatif de celui-ci. L'invention se fonde sur le fait que, en dehors de la zone de risque d'emballement du filtre à particules pendant un lever de pied, on peut autoriser la coupure d'injection de carburant, le procédé permettant avantageusement une régénération naturelle du filtre sans consommer de carburant. Elle se fonde en outre sur le fait que, dans ladite zone de risque d'emballement, il est préférable d'autoriser une régénération limitée, dite ici régénération active modérée, en ajustant la richesse du mélange air-carburant sur une valeur légèrement pauvre, sensiblement égale à 0,98 , plutôt que de l'inhiber en maintenant la richesse égale à 1 comme c'est le cas des procédés connus. Ainsi on autorise une régénération du filtre qui restaure son efficacité de stockage tout en limitant les émissions d'oxyde d'azote, la valeur de richesse se trouvant encore sensiblement dans la fenêtre catalytique du catalyseur trois voies 18.

Avantageusement, on ferme le boîtier-papillon 10 de manière à limiter au strict minimum le débit des gaz Qadm entrant dans le moteur et le couple résiduel ainsi créé par la combustion du carburant injecté avec l'air admis. Ledit couple résiduel, qui ne correspond pas à une requête d'accélération du véhicule via un enfoncement de la pédale d'accélérateur, peut ensuite être avantageusement absorbé par un des consommateurs du véhicule, par exemple, de manière non limitative, l'alternateur pour la charge d'une batterie du véhicule ou encore un compresseur de climatisation. Si la batterie est pleine, la charge électrique supplémentaire peut être dissipée par exemple dans un pare-brise chauffant ou dans une lunette arrière chauffante du véhicule.

Plus précisément, le procédé débute par une étape 100 de fonctionnement normal du véhicule, dans laquelle le moteur est réglé en richesse 1 sur la plupart des points de fonctionnement régime-charge du moteur. Pour cela, de manière connue en soi, la richesse du mélange air-carburant est réglée en boucle fermée autour d'une consigne de richesse, grâce à au moins un signal de richesse des gaz de combustion en amont du catalyseur trois voies 18 qui est mesurée par une sonde à oxygène (non représentée sur la figure 1, en ajustant la durée d'injection de carburant dans les cylindres du moteur.

On notera qu'à cette étape, on n'exclut pas les cas où la richesse du mélange est réglée en boucle ouverte sur une valeur strictement supérieure à 1, notamment aux valeurs de pleine charge et/ou haut régime pour lesquelles la température à l'échappement très élevée ne permet pas de rester à richesse 1.

Lors de cette première étape 100, le filtre à particules 19 est en mode de stockage des particules fines. Le procédé comprend une étape 200 de calcul de détermination de la masse courante de particules fines Mpart stockées dans le filtre. Par exemple, comme mentionné plus haut, on peut déterminer une valeur du débit des gaz d'échappement Qech traversant le filtre et une valeur de la pression différentielle ΔP régnant à ses bornes, puis en déduire ladite valeur de masse Mpart à partir d'une cartographie de correspondance préétablie.

Le procédé se poursuit par une étape de test 300 au cours de laquelle on vérifie si ladite masse courante est inférieure à un seuil. Si tel est le cas, le procédé reprend à l'étape 100 dans lequel le stockage des particules se poursuit sans qu'il y ait régénération du filtre. Dans le cas contraire, le procédé se poursuit par une étape 400 d'identification d'un lever de pied de la part du conducteur. Par exemple on peut mesurer le signal d'un potentiomètre de la pédale d'accélérateur. S'il n'y a pas de lever de pied, autrement dit si on constate un enfoncement de la pédale d'accélérateur, qui correspond à une requête de couple C et d'accélération du véhicule de la part du conducteur, le procédé oriente vers une étape 500 de régénération active du filtre au cours de laquelle la richesse du mélange air-carburant est réglée sur une valeur pauvre de l'ordre de 0,90 , qui est à la fois apte à produire le couple requis C et à régénérer le filtre. Les oxydes d'azote produits en excédent lors de cette étape de fonctionnement en mélange pauvre peuvent avantageusement être absorbés par un piège à oxydes d'azote 18 du moteur.

Au contraire, si un lever de pied est détecté, il convient alors de vérifier si le filtre présente un risque d'emballement. Le procédé oriente vers une étape 600 au cours de laquelle on détermine une valeur de la température du filtre Tfiltre. Dans un mode simplifié, on peut par exemple assimiler cette température à la température des gaz d'échappement pénétrant dans le filtre, cette dernière étant mesurée par un capteur de température (non représenté sur la figure 1). On peut aussi utiliser divers modèles connus de l'état de la technique, en utilisant les températures des gaz en amont et en aval du filtre à particules et l'historique du point de fonctionnement du moteur.

Après cette étape 600 de détermination de la température du filtre Tfiltre, on vérifie à une étape de test 700 si le point dont l'abscisse est la température du filtre Tfiltre et l'ordonnée est la masse de particules fines Mpart se trouve dans la zone de risque d'emballement, c'est-à-dire au-dessus de la courbe représentée sur la figure 2. En d'autres termes, on vérifie si, pour la valeur constatée de la température du filtre, la masse de particules Mpart présente dans le filtre est supérieure à un seuil, ce dernier dépendant de la température et étant une fonction décroissante de la température.

Si ce n'est pas le cas, le procédé oriente vers une étape 800 de régénération naturelle ou passive du filtre, dans laquelle l'injection de carburant est coupée, et, de manière avantageuse, le boîtier-papillon 10 est fermée de manière que le conducteur bénéficie du frein moteur. En revanche, en présence d'un risque d'emballement, le procédé se poursuit par une étape de régénération active modérée 900 dans laquelle la richesse du mélange est réglée sur une valeur légèrement pauvre qui est sensiblement égale à 0,98 . Par « sensiblement », on entend que la richesse est réglée dans l'intervalle 0,98 +/- 0,05.

Avantageusement, à cette étape 900 de régénération active modérée, le boîtier-papillon est refermé pour limiter le débit des gaz d'échappement, le débit d'oxygène et l'augmentation de la température à l'échappement, ainsi que le couple produit par la combustion du carburant injecté. Avantageusement aussi, on enclenche un consommateur du véhicule, par exemple un alternateur du moteur ou un compresseur de climatisation, pour absorber ce couple qui n'a pas été requis par le conducteur, puisque la pédale d'accélérateur est complètement relevée. Cela permet d'éviter une accélération intempestive du véhicule. Avantageusement, l'alternateur permet de charger une batterie du véhicule. Bien entendu, dans l'hypothèse où la batterie est déjà pleine lors de l'actionnement de l'alternateur, il est possible de dissiper la charge supplémentaire dans un autre consommateur du véhicule tel qu'un pare-brise chauffant ou lunette arrière chauffante du véhicule

## Revendications

1. Procédé de régénération d'un filtre à particules (19) monté dans le circuit d'échappement (3) d'un moteur (1) à combustion interne à allumage commandé de véhicule automobile, ledit procédé comprenant au moins un premier mode de régénération active (500) en mélange pauvre du filtre qui est activé quand une valeur de la masse de particules fines (Mpart) stockée dans le filtre (19) est supérieure ou égale à un seuil, quand la pédale d'accélérateur du véhicule n'est pas complètement relevée,
**CARACTERISE EN CE QU'**il comprend aussi
- une étape d'identification (400) d'un état complètement relevé de ladite pédale d'accélérateur ;
- lorsqu'un tel état relevé est constaté, une étape d'identification (700) d'un risque d'emballement du filtre à particules en absence d'injection de carburant dans le moteur ;
- en l'absence d'un tel risque d'emballement, une étape de régénération dans un deuxième mode de régénération passive (800) du filtre, dans laquelle l'injection de carburant dans le moteur est coupée ; et,
- en présence d'un tel risque d'emballement, une étape de régénération dans un troisième mode de régénération active modérée (900) du filtre, dans laquelle la richesse du mélange air-carburant admis dans le moteur est réglée à une valeur sensiblement égale à 0,98.

2. Procédé selon la revendication 1, **caractérisé en ce que** dans le premier mode de régénération active, la richesse du mélange air-carburant admis dans le moteur est réglée à une valeur sensiblement égale à 0,90.

3. Procédé selon l'une quelconque des revendications précédentes, **caractérisé en ce que** dans le troisième mode de régénération active modérée, on ferme une vanne de réglage de débit d'admission d'air (10) du moteur, et on fait absorber par un consommateur du véhicule le couple résiduel qui est produit par la combustion du carburant introduit.

4. Procédé selon la revendication 3, **caractérisé en ce que** le consommateur est un alternateur du moteur.

5. Procédé selon l'une des revendications 3 ou 4, **caractérisé en ce que** le consommateur est un alternateur ou un compresseur de climatisation du véhicule.

6. Procédé selon l'une quelconque des revendications précédentes, **caractérisé en ce que** le risque d'emballement du filtre à particules est constaté lorsque la masse de particules (Mpart) présente dans le filtre est supérieure ou égale à un seuil qui dépend de la température du filtre (Tfiltre).

7. Procédé selon la revendication 6, **caractérisé en ce que** ledit seuil de masse de particules est une fonction décroissante de la température du filtre (Tfiltre).

8. Procédé selon l'une quelconque des revendications précédentes, **caractérisé en ce que** la masse de particules (Mpart) dans le filtre (19) est déterminée à partir d'une cartographie établie en fonction du débit des gaz (Qech) d'échappement traversant le filtre et d'une valeur de la pression différentielle (ΔP) aux bornes du filtre.

## Patentansprüche

1. Verfahren zur Regeneration eines Partikelfilters (19), der im Abgastrakt (3) eines fremdgezündeten Verbrennungsmotors (1) eines Kraftfahrzeugs montiert ist, wobei das Verfahren mindestens einen ersten Modus zur aktiven Regeneration (500) mit magerem Gemisch des Filters umfasst, der aktiviert wird, wenn ein Wert der Feinpartikelmasse (Mpart), die in dem Filter (19) gespeichert ist, größer als oder gleich einem Schwellenwert ist, wenn das Gaspedal des Fahrzeugs nicht vollständig freigegeben ist,
**DADURCH GEKENNZEICHNET, DASS** es auch umfasst
- einen Schritt des Ermittelns (400) eines vollständig freigegebenen Zustands des Gaspedals;
- wenn ein solcher freigegebener Zustand festgestellt wird, einen Schritt des Ermittelns (700) einer Gefahr einer unkontrollierten Regeneration des Partikelfilters bei Nichtvorliegen einer Einspritzung von Kraftstoff in den Motor;
- bei Nichtvorliegen einer solchen Gefahr einer unkontrollierten Regeneration, einen Schritt der Regeneration in einem zweiten Modus zur passiven Regeneration (800) des Filters, bei dem das Einspritzen von Kraftstoff in den Motor unterbrochen wird; und,
- bei Vorliegen einer solchen Gefahr einer unkontrollierten Regeneration, einen Schritt der Regeneration in einem dritten Modus zur gemäßigten aktiven Regeneration (900) des Filters, bei dem die Fettheit des in den Motor eingelassenen Luft/KraftstoffGemisches auf einen Wert von im Wesentlichen gleich 0,98 geregelt wird.

2. Verfahren nach Anspruch 1, **dadurch gekennzeichnet, dass** im ersten Modus zur aktiven Regeneration die Fettheit des in den Motor eingelassenen Luft/KraftstoffGemisches auf einen Wert von im Wesentlichen gleich 0,90 geregelt wird.

3. Verfahren nach einem der vorhergehenden Ansprüche, **dadurch gekennzeichnet, dass** man im dritten Modus zur gemäßigten aktiven Regeneration ein Ventil zur Regelung des Lufteinlassvolumenstroms (10) des Motors schließt und man das Restdrehmoment, das durch die Verbrennung des eingeleiteten Kraftstoffs erzeugt wird, von einem Verbraucher des Fahrzeugs absorbieren lässt.

4. Verfahren nach Anspruch 3, **dadurch gekennzeichnet, dass** der Verbraucher ein Generator des Motors ist.

5. Verfahren nach einem der Ansprüche 3 oder 4, **dadurch gekennzeichnet, dass** der Verbraucher ein Generator oder ein Klimaanlagenkompressor des Fahrzeugs ist.

6. Verfahren nach einem der vorhergehenden Ansprüche, **dadurch gekennzeichnet, dass** die Gefahr einer unkontrollierten Regeneration des Partikelfilters festgestellt wird, wenn die in dem Filter vorhandene Partikelmasse (Mpart) größer als oder gleich einem Schwellenwert ist, der von der Temperatur des Filters (Tfiltre) abhängt.

7. Verfahren nach Anspruch 6, **dadurch gekennzeichnet, dass** der Partikelmasse-Schwellenwert eine abnehmende Funktion der Temperatur des Filters (Tfiltre) ist.

8. Verfahren nach einem der vorhergehenden Ansprüche, **dadurch gekennzeichnet, dass** die Partikelmasse (Mpart) in dem Filter (19) anhand eines Kennfelds bestimmt wird, das in Abhängigkeit vom Volumenstrom der den Filter durchströmenden Abgase (Qech) und von einem Wert des Differenzdrucks (ΔP) an den Klemmen des Filters erstellt wird.

## Claims

1. Method for regenerating a particulate filter (19) mounted in the exhaust circuit (3) of a spark ignition internal combustion engine (1) of a motor vehicle, said method comprising at least a first mode (500) of lean mixture active regeneration of the filter which is activated when a value of the mass of fine particles (Mpart) stored in the filter (19) is greater than or equal to a threshold, when the accelerator pedal of the vehicle is not completely lifted,
**CHARACTERIZED IN THAT** it also comprises
- a step (400) of identifying a completely lifted state of said accelerator pedal;
- when such a lifted state is observed, a step (700) of identifying a risk of runaway of the particulate filter in the absence of fuel injection into the engine;
- in the absence of such a runaway risk, a regeneration step (800) in a second mode of passive regeneration of the filter, in which the injection of fuel into the engine is interrupted; and,
- in the presence of such a runaway risk, a regeneration step (900) in a third mode of moderate active regeneration of the filter, in which the richness of the air-fuel mixture admitted into the engine is set to a value substantially equal to 0.98.

2. Method according to Claim 1, **characterized in that**, in the first active regeneration mode, the richness of the air-fuel mixture admitted into the engine is set to a value substantially equal to 0.90.

3. Method according to either one of the preceding claims, **characterized in that**, in the third moderate active regeneration mode, a valve (10) for regulating the air admission flow rate of the engine is closed, and a consumer of the vehicle is made to absorb the residual torque which is produced by the combustion of the introduced fuel.

4. Method according to Claim 3, **characterized in that** the consumer is an alternator of the engine.

5. Method according to either of Claims 3 and 4, **characterized in that** the consumer is an alternator or an air-conditioning compressor of the vehicle.

6. Method according to any one of the preceding claims, **characterized in that** the runaway risk of the particulate filter is observed when the mass of particles (Mpart) present in the filter is greater than or equal to a threshold which depends on the temperature of the filter (Tfilter).

7. Method according to Claim 6, **characterized in that** said particle mass threshold is a decreasing function of the temperature of the filter (Tfilter).

8. Method according to any one of the preceding claims, **characterized in that** the mass of particles (Mpart) in the filter (19) is determined using a map established as a function of the flow rate of the exhaust gases (Qex) passing through the filter and of a value of the differential pressure (ΔP) at the terminals of the filter.
